# EUROPEAN PATENT SPECIFICATION

(11) **EP 4 305 930 B1**
(45) Date of publication and mention of the grant of the patent: **25.11.2026**
(21) Application number: 22713650.4
(22) Date of filing: 10.03.2022
(51) Int. Cl.: H05B 47/105, H05B 47/175, H04W 4/38

(54) **NETWORK SYSTEM WITH SENSOR CONFIGURATION MODEL UPDATE**
NETZWERKSYSTEM MIT SENSORKONFIGURATIONSMODELLAKTUALISIERUNG
SYSTÈME DE RÉSEAU AVEC MISE À JOUR DE MODÈLE DE CONFIGURATION DE CAPTEUR

(30) Priority: 10.03.2021 NL 2027738
(43) Date of publication of application: 17.01.2024
(73) Proprietor: Schreder Iluminaçao SA, 2790-076 Carnaxide (PT)
(72) Inventor: BANDEIRA, Lourenço, 2794-089 Carnaxide (PT); GLÓRIA, André, 2794-089 Carnaxide (PT); STEURER, Michael, 2794-089 Carnaxide (PT)
(74) Representative: Arnold & Siedsma
(86) International application number: PCT/EP2022/056270
(87) International publication number: WO 2022/189601

(56) References cited:
- US-A1- 2016 198 548
- US-A1- 2019 222 652

## Description

### FIELD OF INVENTION

The present invention relates to a network system comprising edge devices, such as luminaires, having sensors with configuration parameters, in particular a smart-city system comprising luminaires.

### BACKGROUND

A city's task in providing quality public space for its citizens lies not only in reserving sufficient areas but also in ensuring that the conditions, such as maintenance and management, enable it to be used to its full potential. This introduces additional concerns about the quality of the public space, ensuring safety of use, and its accessibility to all user groups as well as the financial burden incurred by the creation and maintenance of public spaces.

To address those challenges cities will increasingly apply new technologies and innovation across a wide range of sectors, from transport and mobility to citizen engagement. In particular, Information and Communication Technologies (ICT) are used increasingly to solve existing and rising challenges within cities. So-called digital cities or smart-cities emerge, producing a lot of data, such that controlling the data volume, ensuring security and privacy and providing future scalability of such systems are essential.

It is common practice today to use cloud computing architecture approaches between sensors and actors deployed in smart cities, limiting the free flow of information between devices due to the centralistic nature of the architecture. One approach to address the explosion of the Internet of Things (IoT) and the ability to collect, analyze and provide big data in the cloud is edge computing; a new computing paradigm in which data is processed at the edges, i.e. at the sensor's level.

Edge Computing refers to the approach to push the process of knowledge discovery from the cloud further towards the connected end devices, also called IoT devices or edge devices. Edge computing relies on data sensed on the edge such that the quality of the sensors on the edge acts as a limiting factor to edge computing.

US 2016/198548 A1 discloses a sensor network in which the detection thresholds of sensors in interconnected luminaires are dynamically adjusted based on status or sensor information from neighbouring devices according to a predetermined strategy.

### SUMMARY

The object of embodiments of the invention is to provide a network system comprising edge devices, in particular for a smart-city, with improved sensing of environmental data.

According to a first aspect of the invention, there is provided a network system comprising a plurality of edge devices, e.g. comprising luminaires. The plurality of edge devices are arranged at a plurality of locations and comprise at least a sensor and processing means. The sensor is configured for obtaining environmental data related to an event in the vicinity of an edge device of the plurality of edge devices. The sensor is set up according to at least one configuration parameter. The processing means is configured to process input data in accordance with a model to derive the at least one configuration parameter of the sensor. The network system is configured to determine an updated model over time and to reset the processing means so as to process input data in accordance with the updated model.

In this way, the network system may change the parameters of the sensor to improve the operation of the sensor, and in particular the quality of the sensed data and/or the energy consumption of the sensor. The model may be updated during operation and may derive an improved configuration parameter for setting up the operation of the sensor. By configuration parameter is meant a parameter influencing how a sensor senses data in practice. By input data is meant any data provided to the processing means in a broad sense. The network system by retraining the model using updated data may generate an updated model so that the quality of the model is continuously improved.

According to an exemplary embodiment, the network system further comprises at least one remote device configured to determine the updated model. In this way the intelligence for determining the update may be delocalized from the edge which typically has limited computational resources and/or communication resources. The processing means using the model at edge level may thus need only limited computational resources. This allows the network system to achieve high quality sensing even on small edge devices having little computational power by simplifying to the minimum the level of artificial intelligence at edge level. In other words the model may thus in itself be a lightweight model while a more complex update process is done separately, for instance using artificial intelligence.

According to an exemplary embodiment, the network system comprises a central control system in communication with the plurality of edge devices, wherein the at least one remote device comprises the central control system. In this way, the intelligence needed for updating the model may be provided by a central control system, in communication with multiple edge devices. The amount of data available at the central control system and the computational resources available at the central control system level enable determining an updated model over time in an efficient and pertinent manner. In this way, small and simple (in terms of computational resources) edge devices may benefit from machine learning performed at central control level using large resources. Additionally or alternatively, the network system comprises a fog device associated with a subset of the plurality of edge devices, and the at least one remote device comprises the fog device. In this way, the intelligence needed for updating the model may be provided by the fog device, in communication with a subset of edge devices. Additionally or alternatively, the network system comprises an edge processing device associated with the edge device comprising the sensor, and the at least one remote device comprises the edge processing device. The computational resources and/or communication means may be more limited at the edge device level than at the central control system level or at the fog device level while still sufficient to determine an updated model over time. Depending on circumstances, the intelligence for updating the model may be delegated in any one or more of the central control system, the fog device and the edge processing device.

According to an exemplary embodiment, the fog device is configured to receive environmental data from the subset, to process data received from the subset and update the model based on the processed data. In this way, from the environmental data of multiple edge devices, the fog device may have enough data to update the configuration model of the at least one sensor of the plurality of edge devices.

According to an exemplary embodiment, the input data comprises any one or more of the following: environmental data e.g. measured by the sensor, edge processed data e.g. based on the environmental data, central control system processed data, fog processed data, data from external data sources, data from another edge device. In this way the model may provide a configuration parameter depending on the input data suited for the specific sensor, offering thus a versatile architecture for any type of sensor and/or network system. Edge processed data based on the environmental data may be classification data related to a sensed event. Such edge processed data may be sent by multiple edge devices to a fog device which may further process and group classification data of the edge devices associated with the fog device to produce fog processed data. Such fog processed data may be sent back to the edge devices to be used as input data of the processing means. Alternatively or additionally, the fog processed data of multiple fog devices may be sent to the central control system to be further processed, optionally also using data from external databases, in order to produce central control system processed data. Such central control system processed data may be transmitted to the edge devices to be used as input data of the processing means. Alternatively or additionally, data from external data sources may be taken into account, such as data received from a mobile device, such as an (autonomous) vehicle, a mobile sensor, a mobile communication device, an external database (e.g. traffic database, weather database, regulation database, infrastructure database), etc. For example, a vehicle may store information about the driving speed of a past time period, which may be interesting for extending the knowledge of the edge devices and for setting a configuration parameter of the sensor. For example, when the received data indicates that there is a traffic jam or that an accident took place, a frame rate of a camera may be changed.

Preferably, the processing means and the sensor are included in a first edge device of the plurality of edge devices. More in particular, each edge device may have a processing means to determine one or more configuration parameters for its associated sensor(s). The input data may then further comprise data received from a second edge device of the plurality of edge devices. Indeed, data from other, e.g. neighboring edge devices may be useful to decide whether a configuration parameter of the sensor needs to be changed. For example, if a second edge device detects an accident, the frame rate of one or more neighboring first edge devices may be increased.

According to an exemplary embodiment, the at least one configuration parameter comprises one or more of the following: an operating value for the sensor (a sampling rate, a frame rate, an exposure time, an aperture angle, a frequency, a power, an orientation angle), an operational status (on, off, sleep mode), a sensing range (temperature range, frequency bandwidth, distance range), a sensing option (internal sensing, external sensing, sensing protocol, a calibration parameter); an encryption key, and more generally any kind of control parameter. In this way, how the sensor effectively senses data in practice may be updated over time to improve the quality of the data and/or save resources when possible. The model may for instance be updated to change an operational status to turn off a sensor working poorly or unnecessarily at a certain time. In an exemplary embodiment the one or more control parameters ensure a good operation of the sensor within the edge device, e.g. a luminaire assembly. For example, the one or more control parameters may be set to take into account the installation height of the sensor and/or the desired detection area of the sensor (e.g. size of the detection area, position of the detection area, etc.) and/or the resolution of the sensor, etc. The one or more control parameters may control a digital adjustment and/or a mechanical adjustment of the sensor. For example, the sensor could be configured to monitor multiple zones, and one or more control parameters may set which zones have to be activated and/or which zones have to be deactivated. Another example of a control parameter could be a time period during which a sensor of the edge device should be switched on or during which a power of the sensor should be changed (e.g. increased), upon detection of a predetermined situation by the sensor. The predetermined situation may be e.g. the detection of an object with predetermined properties (e.g. size related and/or speed related), the detection of a predetermined traffic related property (e.g. an amount of cars per minute being above a predetermined threshold), the detection of a weather-related property (e.g. visibility below a predetermined threshold), etc. Yet other control parameters may relate to properties of objects to be detected by the sensor (e.g. car, bicycle, pedestrian), the sense and/or orientation of moving objects to be detected, etc.

According to an exemplary embodiment, the at least one model is based on a neural network comprising a plurality of layers, each layer comprising a plurality of neurons and each neuron being associated with a bias, an activation function and at least one weight associated with at least one neuron of a lower layer. The network system is configured to update the model by modifying at least one of the number of layers, the number of neurons, a weight, a bias and an activation function. **In** this way, the model may have some self-learning capabilities based on the received input data, to derive the configuration parameter best matching the situation while the update of the model by the network system further improves the quality of this self-learning over time.

According to an exemplary embodiment, the network system is configured to update the model by retraining the last layer, preferably by at least increasing the number of neurons of the last layer. **In** this way, the amount of retraining is limited as well as the amount of computational resources necessary to perform said retraining. Alternatively, the central control system is configured to update the processing model by retraining the last two layers.

According to an exemplary embodiment, the at least one model is based on a decision tree comprising a plurality of branches, each branch comprising a threshold, wherein the network system is configured to update the model by modifying at least one of the number of branches and a threshold. **In** this way a simple rule engine model may be implemented while the update by the network system may be the result of the training of said rule-engine model to improve the quality of the model over time.

According to an exemplary embodiment, the event comprises one of an event related to an object in the one or more edge devices or in the vicinity of the one or more edge devices, an event related to a state of an object in the one or more edge devices or in the vicinity of the one or more edge devices, an event related to the area in the vicinity of the one or more edge devices, an event related to a state of a component of the edge device. In this way, a valuable environmental stimulus may be detected. Among others, the following events may for instance be detected:
- an event related to an object (both static and dynamic) and/or its state in the vicinity of the one or more edge devices, where objects may be vehicles, animals, persons, buildings, street furniture (trash bin, bus stop), a communication cabinet, a charging station, a street sign, a traffic sign, a traffic light, a telecommunication cabinet. For instance may then be detected the presence/movement of vehicles and other objects, a trash bin reaching its full state, a surface, such as a street or pavement surface, changing from a dry to a wet state, the state of a traffic sign or a traffic light, the state (in use or not) of a charging station, the state of a parking space;
- an event related to a state of a component of the one or more edge devices. For instance a fault condition (e.g. leakage current, failed surge protection device, power failure, solder joint failure), e.g. in a luminaire head may be detected;
- an event related to the environment itself, for instance the detection of a visibility condition, the detection of a change in the weather like rain, fog, sun, wind, the detection of a pollution level, the detection of a light level; the detection of an incident in the vicinity of the one or more edge devices such as a security related incident, e.g. an explosion, a car accident, a fire, flooding, an earthquake, a riot, a gun shot, presence of gas (chemicals), radiation, smoke.

According to an exemplary embodiment, the sensor is selected from: an optical sensor such as a photodetector or an image sensor, a sound sensor, a radar such as a Doppler effect radar, a LIDAR, a humidity sensor, an air quality sensor, a temperature sensor, a motion sensor, an antenna such as a Bluetooth antenna for a Bluetooth sensor, an RF sensor, a metering device (e.g. a metering device for measuring the power consumption of a component of an edge device, more in particular a metering device for measuring the power consumption of a driver of a luminaire), a vibration sensor, a malfunctioning sensor (e.g. a sensor for detecting the malfunctioning of a component of an edge device such as a current leakage detector for measuring current leaks in a driver of a luminaire), a measurement device for measuring a maintenance related parameter of a component of the edge device, an alarm device (e.g. a push button which a user can push in the event of an alarming situation). In this way, environmental data about an event in the vicinity of an edge device may be detected, e.g. characteristics (presence, absence, state, number, direction, speed, wearing mask or not) of objects like vehicles, street furniture, animals, persons, sub-parts of the edge device, or properties related to the environment (like weather (rain, fog, sun, wind), pollution, visibility, earth quake) or security related events (explosion, incident, gun shot, user alarm) in the vicinity of the edge device, maintenance related data or malfunctioning data of a component of the edge device. For example, in case of a crisis, the model may be configured to set one or more configuration parameters allowing to detect additional features like whether people are wearing mask or not, e.g. during a limited period of time.

According to an exemplary embodiment, an edge device comprises multiple sensors, e.g. an optical sensor such as a photodetector or an image sensor, a sound sensor, and a radar such as a Doppler effect radar. The processing means may then be configured to process input data in accordance with the model to derive at least one configuration parameter of each sensor of the multiple sensors. Such an exemplary combination of sensors is both practical and efficient mimicking the human senses of touch, hearing and sight. Preferably, the optical sensor is an image sensor such as a camera. It has been found that the combination of these three sensors in an edge device allows for an accurate classification of objects in the vicinity of the edge device, at all times of the day. Such classification may be used as a part of the input data and/or to update the model either at the edge device or in a remote device.

According to an exemplary embodiment, the plurality of edge devices comprise any one or more of the following: a luminaire, a bin, a sensor device, a street furniture, a charging station, a payment terminal, a parking terminal, a street sign, a traffic light, a telecommunication cabinet, a traffic surveillance terminal, a safety surveillance terminal, a water management terminal, a weather station, an energy metering terminal, an access lid in a pavement. The network system can comprise similar edge devices (e.g. a network of outdoor luminaires). Alternatively, the network system can comprise different edge devices such that a network of distinct edge devices is formed. Existing structures ubiquitously present in cities may be used for hosting networks, limiting in this way the aesthetic impact of installing such networks. Structures having already an access to the power grid are particularly interesting, while luminaires having just the right height to capture all kinds of valuable data from sensors are further particularly suited as edge devices.

According to an exemplary embodiment, the plurality of edge devices comprises an edge device with a sensor configured for obtaining a set of environmental data related to an event in the vicinity of the edge device, preferably at least two sensors configured for obtaining at least two sets of environmental data related to an event in the vicinity of the edge device, and a classification module configured to determine classification data of the event based on the at least one set, preferably at least two sets, of environmental data. The classification data may be used by the at least one remote device to determine the updated model and/or the classification data may be used as a portion of the input data. This allows improving on the one hand the operation of the sensors and on the other hand optimizing computational resources.

According to an exemplary embodiment, the network is configured to determine the updated model based on one or more of the following: environmental data e.g. measured by the sensor, edge processed data e.g. based on the environmental data, central control system processed data, fog processed data, data from external data sources, data from another edge device.

### BRIEF DESCRIPTION OF THE FIGURES

This and other aspects of the present invention will now be described in more detail, with reference to the appended drawings showing preferred embodiments of the invention. Like numbers refer to like features through out the drawings.
Figure 1 illustrates an embodiment of a network architecture in a scenario where an event is observed by two edge devices.
Figure 2 illustrates an exemplary embodiment of a network architecture with a sensor configuration model update.
Figure 3 illustrates an exemplary embodiment of another network architecture with a sensor configuration model update.
Figure 4 illustrates an exemplary embodiment of a decision tree on which a model to derive a configuration parameter of a sensor may be based.

### DESCRIPTION OF EMBODIMENTS

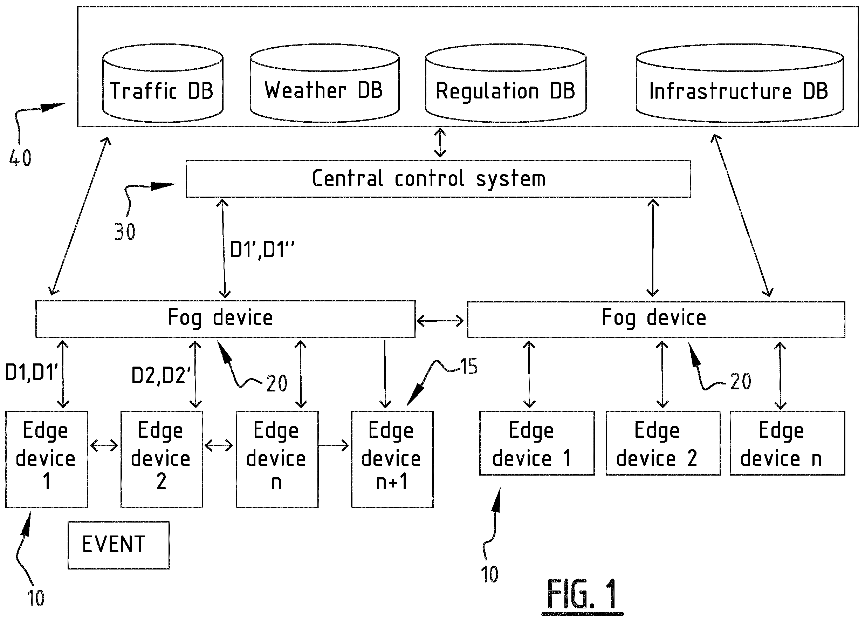

Figure 1 illustrates a network system according to an exemplary embodiment. The network has a hierarchical architecture, with a first level of edge devices 10, an intermediate level of fog devices 20 and a top level with a central control system 30.

The network system of Figure 1 comprises a plurality of edge devices 10 arranged at a plurality of locations. The edge devices may for instance be spread in a smart-city and the plurality of edge devices 10 may comprise any one or more of the following: a luminaire, a bin, a sensor device, a street furniture, a charging station, a payment terminal, a parking terminal, a street sign, a traffic light, a telecommunication cabinet, a traffic surveillance terminal, a safety surveillance terminal, a water management terminal, a weather station, an energy metering terminal, a lid arranged in a pavement. This list is not exhaustive and other edge devices may be envisaged depending on circumstances.

The network further comprises a plurality of fog devices 20, each fog device 20 being associated with a subset of a plurality of edge devices 10, while a central control system 30 is in communication with the plurality of fog devices 20 and is configured to receive fog processed data from the plurality of fog devices 20 and send control data to the plurality of fog devices 20. It is noted that although represented as a fixed subset of edge devices in Figure 1, a subset of edge devices 10 may change over time and an edge-device 10 may be or become part of more than one subset, providing for instance some overlap between geographically adjacent subsets. Fog devices 20 may further be configured to communicate with each other depending on circumstances.

Preferably, a fog device 20 and the associated subset of edge devices 10 may be arranged in a mesh network. For example, the edge devices may be configured to transmit edge processed data to its associated fog device and receive control data from its associated fog device using a wireless personal area network (WPAN), preferably as defined in the IEEE 802.15.4 standard. Thus, the communication between the edge devices 10 and its associated fog device 20 may be based on a short range protocol such as IEEE 802.15.4 (e.g. Zigbee, Wi-SUN) or any other suitable communication protocol such as Wi-Fi. The network may be managed by the fog device 20 or by a separate segment controller.

A fog device 20 may be defined as having less processing and storage capabilities than a central control means 30 but more processing, storage and/or communication capabilities than an edge device 10. When the central control means 30 operate under the principle of cloud computing, the intermediate level of processing performed by fog devices 20 is referred to as fog computing. Fog computing may comprise a certain degree of distribution of the processing among a plurality of fog devices 20 arranged in a mesh with the edge devices 10.

A segment controller insofar as able to communicate with at least two edge devices 10, e.g. via short range communications and able to communicate with a central control means 30, e.g. via long range communications, may operate as a fog device 20 according to the present invention.

The plurality of fog devices 20 may be configured to communicate with the central control system 30, e.g. through a cellular network.

In such a solution the edge device 10 may only be capable of communicating through the short range communication protocol. However, it is also possible that at least some edge devices 10 are capable of communicating both through a short-range protocol and a long-range protocol (e.g. through the cellular network). Also a fog device 20 may be integrated with one of the edge devices 10, e.g. one of the luminaires of a group of luminaires could function as the fog device for a group of edge devices comprising the group of luminaires and possibly also other edge devices.

Each fog device 20 may be associated with a subset of a plurality of edge devices 10 located geographically in the vicinity of each other and forming a regional subset of edge devices 10. In an example a subset of edge devices 10 may be defined for edge devices installed in the same neighborhood, whether installed on luminaires, traffic lights, trash bins or any other infrastructure. The subset may alternatively be selected on the basis of a common purpose or property between edge devices 10. In an example, a subset of edge devices may be defined based on the location, e.g. a subset for edge devices installed on luminaires lighting the same road. In another example, a subset of edge devices may be defined for edge devices located next to a specific city infrastructure, e.g. next a bus stop, a school, a pedestrian crossing. In another example, the subset may be defined taking into account the function of the edge devices, e.g. edge devices with a similar function may be grouped or edge devices with a complementary function may be grouped, or edge devices with similar sensors may be grouped, or edge devices with different sensors may be grouped.

Additionally a database level 40 may be provided and may comprise among others a traffic database, a weather database, a regulation database or an infrastructure database. The database level 40 may be in communication with the plurality of fog devices 20 and/or the central control system 30.

Additionally Figure 1 illustrates a scenario where an event is observed by two edge devices 10 of a subset of n+1 edge devices 10, 10' connected to the same fog device 20. The first and the second edge devices numbered Edge device 1 and Edge device 2 may be adjacent geographically but the teachings of this embodiment should not be limited to this option. The fog device 20 may receive first edge processed data D1 about an event from Edge device 1 and second edge processed data D2 about an event from Edge device 2. The fog device 20 may process the first and second edge processed data, D1 and D2, to determine whether or not the first and second edge processed data D1, D2, relate to the same event, and may transmit fog processed data D1' to the central control system in accordance with the determined result. Optionally the fog processed data D1' may also be transmitted to the associated edge devices 10, 15 and may be used by the edge devices 10, 15 as input data, see further. Additionally more than two streams of edge processed data or other data (e.g. data from a database) may be compiled to generate the fog processed data D1', and/or more than one event in common may be compiled between the different streams of edge processed data D1-Dn from the subset of Edge devices 1-n connected to the fog device 20.

Additionally the fog device 20 may augment the fog processed data D1' using data from a local database (not shown) or from one of the databases of the database level 40. In one example, the geographical location of an edge device 10 or of multiple edge devices 10 where multiple edge devices have detected the same event, may be added to the fog processed data D1' prior to transmission to the central control system 30 to augment the data. In the case of a city network of trash bins, once the fog has processed which bins are full, a GPS location of each bin may be added to generate an itinerary for the garbage collection services, before sending the data to the central control system 30.

In another aspect, a fog device 20 may be configured to take decisions on the processing and transmitting of the data, said decisions including one or more of the following:
- whether or not received data is to be processed by the fog device or to be transmitted to the central control system;
- whether or not data processed by the fog device is to be transmitted to the central control system.

It is noted that for some data, the fog device 20 may work autonomously independent of the central control system 30.

According to another aspect a fog device 20 and its associated subset of edge devices 10 may be arranged in a mesh network, where multiple interconnections between edge devices 10 of the subset may be provided. In some network situations, the latency issue may favor a direct edge processing and edge-to-edge communication via the mesh. One example thereof may be for a luminaire network detecting at night an incoming car in a tunnel, communicating to adjacent luminaires in the tunnel directly the need to brighten the lighting without first waiting for the confirmation of the fog device 20. The idea is that an edge device 10 could also send directly control signals to another edge device 15 if the need would arise.

The central control system 30 receives fog processed data D1' from multiple fog devices and may further process the fog processed data D1' to generate control system processed data D1". Such control system processed data D1" may be transmitted to the multiple fog devices 20 and from there to the edge devices to be used as input data by the processing means of the edge devices 10, see further. Also the control system processed data D1" may be used to determine an updated model over time and to reset the processing means of the edge devices 10 so as to process input data in accordance with the updated model.

The fog devices and edge devices may use a messaging layer protocol for communicating with each other. An exemplary messaging layer M2M protocol is the Lightweight Machine to Machine (LwM2M) protocol defined in Lightweight Machine to Machine Technical Specification, last approved version 1.1.1, Open Mobile Alliance, 25 June 2019. The M2M client device (e.g. included in an edge device) may be configured to obtain environmental data and to generate edge processed data and notify the M2M server device regarding the obtained environmental data and/or the edge processed data. The M2M server device (e.g. included in a fog device) may perform one or more actions in response to the notification.

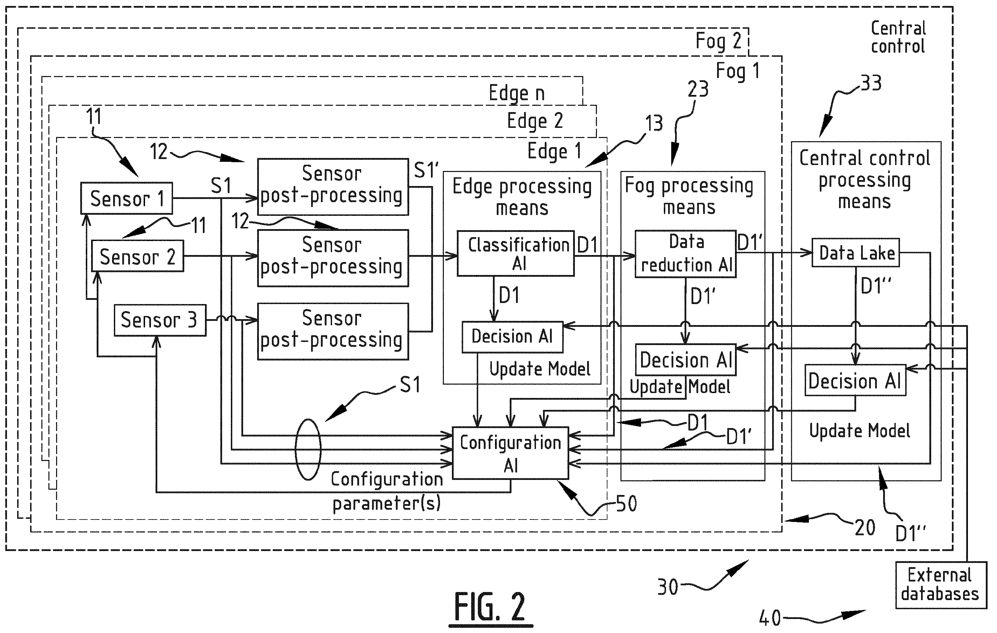

Figure 2 illustrates an exemplary embodiment of a network architecture with a sensor configuration model update. The network system comprises a plurality of fog devices 20, each comprising a plurality of edge devices 10 numbered as 1 to n communicating with their respective fog device 20. An edge device, Edge 1, may comprise for instance three sensors 11, Sensor 1 to Sensor 3, configured for obtaining environmental data related to an event in the vicinity of the edge device 10, Edge device 1. Each sensor 11 may be set up according to at least one configuration parameter.

The at least one configuration parameter may comprise one or more of the following: an operating value for the sensor (a sampling rate, a frame rate, an exposure time, an aperture angle, a frequency, a power, an orientation angle), an operational status (on, off, sleep mode), a sensing range (temperature range, frequency bandwidth, distance range), a sensing option (internal sensing, external sensing, sensing protocol, a calibration parameter), an encryption key.

In an exemplary embodiment, the one or more sensors 11 may comprise:
- a camera, which may be set up according to any one or more of the following: a frame rate, an aperture angle and/or an exposure time, a protocol used (e.g. a protocol used to communicate with other devices),
- a radar set up according to any one or more of the following: a frequency and/or a power depending on a required detection distance, a protocol used (e.g. a protocol used to communicate with other devices),
- an audio sensor set up according to any one or more of the following: a frequency, a protocol used (e.g. a protocol used to communicate with other devices).

Other sensors 11 may be envisaged and for illustrative purposes, possible configurations parameters for some typical sensors are listed below:
- a humidity sensor may be set up according to any one or more of the following: its operational state, whether on or off for saving power, a statistic parameter to be determined (e.g. an average or maximum or minimum of a measured value within a time window), a protocol used (e.g. a protocol used to communicate with other devices),
- an air quality sensor for sensing particles (carbon dioxide, humidity, pollutant, etc..) may be set up according to any one or more of the following: one or more threshold sensing levels or sensing level ranges per type of detected particle, a measurement interval, a statistic parameter to be determined (e.g. an average or maximum or minimum of a measured value within a time window), a protocol used (e.g. a protocol used to communicate with other devices),
- a temperature sensor may be set up according to any one or more of the following: a measurement interval, a temperature range, a statistic parameter to be determined (e.g. an average or maximum or minimum of a measured value within a time window), an option of measuring inside and/or outside the luminaire, a protocol used (e.g. a protocol used to communicate with other devices),
- a motion sensor may be set up according to any one or more of the following: a sensitivity threshold, a protocol used (e.g. a protocol used to communicate with other devices),
- an antenna and an RF sensor may be set up according to any one or more of the following: a power, an orientation, a frequency bandwidth range, on operational status (on, off), a protocol used (e.g. WiFi, Lora, Bluetooth), priority parameters (e.g. different priorities for different communication protocols),
- a metering device may be set up according to any one or more of the following: a measurement interval, a number of parameters to measure, a statistic parameter to be determined (e.g. an average or maximum or minimum of a measured value within a time window), a protocol used (e.g. a protocol used to communicate with other devices),
- a vibration sensor may be set up according to any one or more of the following: a frequency rate, an operational status (on/off), a recording option, a protocol used (e.g. a protocol used to communicate with other devices),
- a light sensor, a malfunctioning sensor, a measurement device for measuring a maintenance related parameter of a component of the edge device, an alarm device (such as a panic button), may be set up according to any one or more of the following: a measurement frequency, an operational status (on/off), a trigger threshold (e.g. a threshold value for triggering an alarm or for performing a measurement, e.g. a pressure threshold for a panic button), a protocol used (e.g. a protocol used to communicate with other devices), a power/current/voltage level (e.g. increased power to compensate for degradation of the sensor).

More generally, the configuration parameter may be any kind of control parameter ensuring a good operation of the sensor within the edge device, e.g. a luminaire assembly. For example, the control parameters may be set to take into account the installation height of the sensor and/or the desired detection area of the sensor (e.g. size of the detection area, position of the detection area, etc.) and/or the resolution of the sensor, etc. The one or more control parameters may control a digital adjustment and/or a mechanical adjustment of the sensor. For example, the sensor could be configured to monitor multiple zones, and one or more control parameters may set which zones have to be activated and/or which zones have to be deactivated. Another example of a control parameter could be a time period during which a sensor of the edge device should be switched on or during which a power of the sensor should be changed (e.g. increased), upon detection of a predetermined situation by the sensor. The predetermined situation may be e.g. the detection of an object with predetermined properties (e.g. size related and/or speed related), the detection of a predetermined traffic related property (e.g. an amount of cars per minute being above a predetermined threshold), the detection of a weather-related property (e.g. visibility below a predetermined threshold), etc. Yet other control parameters may relate to properties of objects to be detected by the sensor (e.g. car, bicycle, pedestrian), the sense and/or orientation of moving objects to be detected, etc.

Figure 2 shows further for each sensor 11 an optional dedicated sensor post-processing element 12. Post-processing may be applied to raw sensor data S1 to improve the accuracy of the sensed data. For instance, post-processing may encompass filtering to remove noise and state estimating to extract a feature related to an event. The output of the post-processing elements 12 may then be communicated to edge processing means 13. The edge processing means 13 may comprise a Classification AI (Artificial Intelligence) module configured for combining the data from several sensors and outputting a detection class. However, the edge processing means may also use a decision tree for performing the classification. By classification is meant a process wherein an event may be classified into a predetermined set of classes and associated with a predetermined list of attributes, depending on the event.

The output of the Classification AI may be communicated as edge processed data D1 to the associated fog device 20. The fog device 20 may further comprise fog processing means 23 e.g. comprising a Data Reduction AI (Artificial Intelligence) module configured for simplifying the data retrieved and removing duplicate results.

The output of the Data Reduction AI module may be communicated as fog processed data D1'to the central control system 30 comprising central control processing means 33 for collecting and storing all data and results in a Data Lake module.

As mentioned above, at least a sensor 11 of an edge device 10 may be set up according to at least one configuration parameter. The at least one configuration parameter is derived by processing means 50 comprising e.g. a Configuration AI module and being configured to process input data in accordance with a model to derive the at least one configuration parameter of the sensor. The Configuration AI is typically part of the edge device 10 but may also be included in the fog device 20. The input data for the Configuration AI may comprise any one or more of the following: environmental data S1, edge processed data D1, central control system processed data D1", fog processed data D1', additional data from external data sources, data from other edge devices.

Environmental data S1 may be the data directly output by the sensors 11. Alternatively or in addition, post-processed sensor data S1' may be used as environmental input data. Edge processed data D1 is data communicated by an edge device 10 to an associated fog device 20, fog processed data D1' is data communicated by a fog device 20 to the central control system, processed data D1" is data available at the central control level.

The processing means 50 (e.g. including a Configuration AI module) may further receive instructions to update the model from one or more of a plurality of Decision AI modules which may be included in any one or more of the edge processing means 13, the fog processing means 23 and the central control processing means 33. Thus, decision AI modules may be present at edge, fog and/or central control level and may have self-learning/training capabilities for deriving an update of the model of the processing means 50 (e.g. including a Configuration AI module) based on the data they receive. By self-learning are meant for instance computer algorithms that can improve automatically through experience and by the use of data. Machine learning algorithms build a model based on sample data, known as training data, in order to make predictions or decisions without being explicitly programmed to do so. In particular, the edge processing means 13 may comprise a Decision AI module to derive the instructions to update the model of the processing means 50 (e.g. including a Configuration AI module) based on edge processed data D1 and optionally data from external data sources. The fog processing means 23 may comprise a Decision AI module to derive the instructions to update the model of the processing means 50 (e.g. including a Configuration AI module) based on fog processed data D1' and optionally data from external data sources. The central control processing means 23 may comprise a Decision AI module to derive the instructions to update the model of the processing means 50 (e.g. including a Configuration AI module) based on central control processed data D1" and optionally data from external data sources. Depending on circumstances and resources available, there may be a plurality of Decision AI modules at different levels (edge, fog, central control) acting independently or there may be a single Decision AI module. In an exemplary embodiment, the central control processing means 33 may comprise a single Decision AI module receiving as training data all the data stored in the Data Lake and additional data from external databases to learn by itself how to update the one or more processing means 50 (e.g. including one or more Configuration AI modules) of the whole network system. Each model of each processing means 50 (e.g. including a Configuration AI module) may then be specifically improved over time e.g. by changing one or more model parameters with one or more updated model parameters.

In an exemplary embodiment, the model used to derive the at least one configuration parameter may be based on a neural network comprising a plurality of layers, each layer comprising a plurality of neurons and each neuron being associated with a bias, an activation function and at least one weight associated with at least one neuron of a lower layer. The network system may be configured to update the model by modifying at least one of the number of layers, the number of neurons, a weight, a bias and an activation function. The network system may be configured to update the model by retraining the last layer, preferably by at least increasing the number of neurons of the last layer. Alternatively the network system is configured to update the model by retraining the last two layers. The one or more Decision AI modules may send to the processing means 50 (e.g. including a Configuration AI module) an updated model, e.g. in the form of one or more updated model parameters, including for instance an updated number of layers, neurons, weight, bias and activation function.

In another exemplary embodiment, the model used to derive the at least one configuration parameter may be based on a decision tree comprising a plurality of branches, each branch comprising a threshold, wherein the network system may be configured to update the model by modifying at least one or more of the number of branches and a threshold. For instance a threshold associated with a decision branch regarding an on/off operational state may be updated over time. It is noted that the update of the model may be obtained by training performed either at the edge level, the fog and/or the central control level. The one or more Decision AI modules may send to the processing means 50 (e.g. including a Configuration AI model) an updated model, e.g. in the form of one or more updated model parameters, including for instance an updated number of branches and/or thresholds for the rule-engine Configuration AI.

In an exemplary embodiment already discussed, one edge device 10 may comprise as sensors 11 a camera, a radar and an acoustic sensor (microphone). The processing means 50 may process input data in accordance with a model to derive the at least one configuration parameter of the sensors 11. As input data, e.g. control system processed data D1" e.g. based on data from an external database regarding day/night information (as light may affect the camera aperture) or weather information (as wind may for instance affect the microphone), and/or fog processed data D1' regarding traffic in the area of the subset comprising that edge device (to adapt the frame rate for the camera as a function of the traffic) may be processed to deliver the configuration parameter(s). It is noted that this list is not exhaustive and that additional input data may be envisaged in this embodiment. If only the central control processing means 33 comprises a Decision AI module, that decision AI module may decide to update the model based on central control processed data D1" and optionally data from external databases. For instance the central control decision AI module may decide to update the model of that specific edge to change the configuration parameter regarding the operational state of the microphone (turn it off) because works have been identified in the area of the subset associated with that specific edge as generating high noise pollution. Based on the updated configuration parameter, the microphone may then shut down, saving sensing power but also saving computational power since post-processing and classification may in turn be simplified.

Other sensors may be envisaged and for illustrative purposes, other input data for some typical sensors are listed below:
- for a temperature sensor, changes in air pressure may be relevant input data,
- for a motion sensor, wind properties may be relevant input data,
- for a vibration sensor, the weather, the type of edge device, e.g luminaire (whether or not including moving parts), incident information like construction works may be relevant input data.

A skilled person may envisage for other sensors, other relevant input data as far as said input data may affect the operation and quality of the sensing by the sensor.

It is noted that in the network architecture presented in Figure 2 fog devices 20 may also be edge devices with additional capabilities. For example, the edge devices 10 may be luminaire systems, and some luminaire systems may comprise both edge and fog capabilities. Fog capabilities may include e.g. more processing power as compared to the edge processing power and/or more/different communication means.

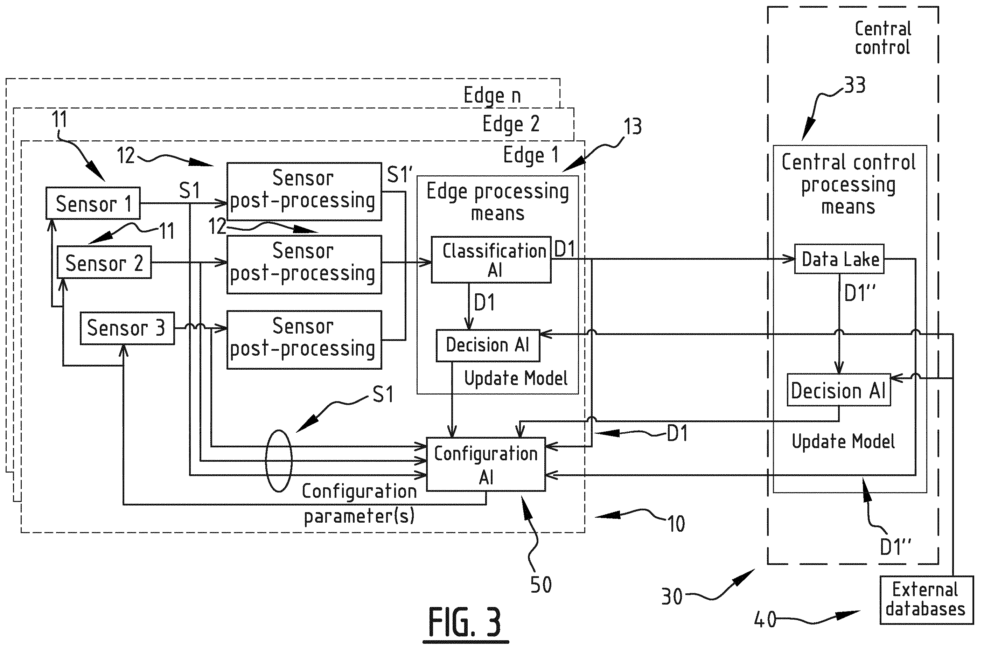

Figure 3 illustrated another exemplary embodiment of the invention which is similar to the example of figure 2 with this difference that no fog devices are present in the network system. In such an embodiment the edge processed data D1 is sent directly to the central control system 30, and used by the central control processing means 33 to determine central control processed data D1". The other devices, means and modules are similar to the corresponding ones of Figure 2 and reference is made to the detailed description given above.

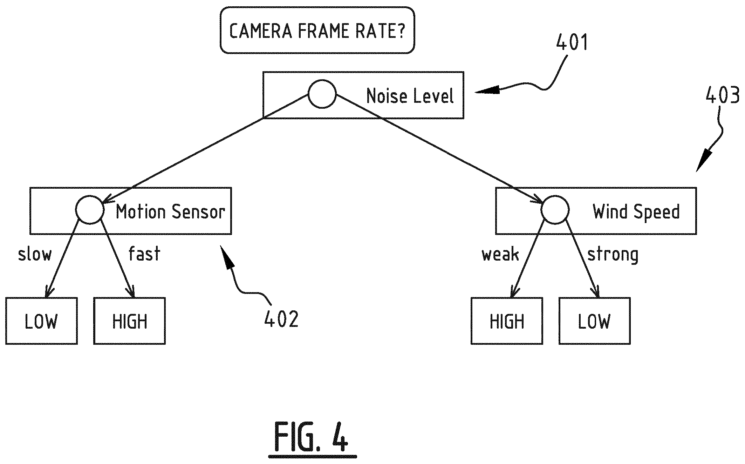

Figure 4 illustrates an example of a model based on a simple decision tree used to set a configuration parameter, here a frame rate, of a sensor, here a camera. The output of the tree is either HIGH if it seems that there is a lot of information in the scene required to be captured with the camera and LOW otherwise. It is assumed that the edge device comprises as sensors a camera, a microphone and a motion sensor.

In the first step 401 the noise level provided by the microphone is compared with a threshold. Based on the outcome, here simplified as one of {quiet, loud}, either step 402 or step 403 is performed.

If the outcome of step 401 is loud, in step 403 the wind speed is checked. The wind speed may be obtained e.g. from an external data source or from the output of the motion sensor. If the wind speed is strong, it is assumed that the noise is coming from the wind, and the camera frame rate is set to LOW as the camera will not capture anything interesting. If the wind speed is weak, it is assumed that the origin of the noise is from the environment, and the camera frame rate is set to HIGH as the chance is high that we can capture the information with the camera. If the outcome of step 401 is quiet, in step 402, the measurements performed by the motion sensor (PIR sensor for instance) are checked to see if something is moving in the environment. If movements are slow, there is not much to detect with the camera and the camera frame rate is set to LOW. If the motion sensor reports fast movement, the camera frame rate is set to HIGH.

In such an embodiment, the model may define as model parameters the thresholds used in steps 401, 402, 403 to determine if the noise is quiet/loud, to determine if the wind speed is weak/strong, and to determine of the motion is slow/fast, respectively. Updating the model may consist in changing the model parameters and/or adding additional branches, e.g. adding an intermediate branch when the movements have an intermediate speed and adding an INTERMEDIATE configuration parameter which is set when the motion sensors detects an intermediate movement speed.

According to another example, it is assumed that the edge device comprises as sensors a camera, and a microphone and that the camera has a reliability index higher than the reliability index of the microphone. In other words, the input data from the camera is more reliable than the input data from the microphone. In such a situation, the measured noise level from the microphone is compared with a threshold to return an information {NO CAR NOISE, CAR NOISE} indicative of the absence or presence of a noise associated with a car. Similarly, an image captured by the camera is analyzed to return an information {CAR, NO CAR} indicative of the absence or presence of a car. In case of a discordance between the returned information derived from the microphone and the camera (an information {NO CAR NOISE} being expected for an information {NO CAR} and an information {CAR NOISE} being expected for an information {CAR}), the system may update the model by changing the threshold used by the microphone to detect the presence of cars to match the information returned by the camera. The network may further be configured to determine the direction of change of the parameter as well as the amount of change, and iteratively repeat the measuring step and updating step until the results of the microphone and camera are consistent with each other. In other words, the network may be configured to determine by itself an updated model by changing a parameter of the sensor of the plurality of edges having the lowest reliability index and by iteratively repeating the process to improve said model until a convergence between the different sensors is achieved.

According to another example, the model may be updated to adjust/optimize one or more quality criteria. A quality criterion may be related to a property of input data, edge processed data or fog processed data, like contrast, exposure or brightness of an image. For instance, an updated model for an edge device comprising a camera may be determined to automatically adjust the contrast of an image captured by the camera, or the brightness of the image. In that case, the self-learning capabilities of the network amount to the iterative automatic adjustment of the parameter(s) affecting the quality criterion. The choice of the quality criterion may be learned by the network itself based on experience or may be predetermined.

It is noted that the model may be updated by combining both options described above, namely optimizing based on a quality criterion of a single sensor and comparing data from sensors with different reliability indexes.

The skilled person will understand that this is merely a simple example of a suitable decision tree and that in practice decision trees may be more complex and involve more braches and thresholds depending on the sensors present and the configuration parameters involved.

Whilst the principles of the invention have been set out above in connection with specific embodiments, it is understood that this description is merely made by way of example and not as a limitation of the scope of protection which is determined by the appended claims.

## Claims

1. Network system comprising:
- a plurality of edge devices (10), e.g. comprising luminaires, said plurality of edge devices being arranged at a plurality of locations, the plurality of edge devices comprising
- at least a sensor (11), said sensor being configured for obtaining environmental data related to an event in the vicinity of an edge device of the plurality of edge devices, said sensor being set up according to at least one configuration parameter, **characterised in that** the plurality of edge devices further comprise
- a processing means (50) configured to process input data in accordance with a model to derive the at least one configuration parameter of the sensor;
- wherein the network system is configured to determine an updated model over time and to reset the processing means so as to process input data in accordance with the updated model.

2. The network system of claim 1, wherein the network system is configured to have self-learning capabilities to derive an updated model over time.

3. The network system of any of the above claims, wherein the network is configured to determine the updated model based on one or more of the following: a quality criterion, a reliability index of a sensor.

4. The network system of the previous claim, wherein the network is configured to determine the updated model by changing a parameter of the at least one sensor of the plurality of edge devices having the lowest reliability index.

5. The network system of any of the above claims, further comprising at least one remote device (20, 30) configured to determine the updated model, further preferably comprising a central control system (30) in communication with said plurality of edge devices, wherein the at least one remote device comprises the central control system.

6. The network system of the above claim, further comprising a fog device (20) associated with a subset of said plurality of edge devices, wherein the at least one remote device comprises the fog device.

7. The network system of the above claim, wherein the fog device (20) is configured to receive environmental data from said subset, to process data received from said subset and update the model based on the processed data.

8. The network system of any of above claims, wherein the input data comprises any one or more of the following: environmental data (S1) measured by the sensor, edge processed data (D1) based on the environmental data, central control system processed data (D1"), fog processed data (D1'), data from external data sources.

9. The network system of any of above claims, wherein the processing means and the sensor are included in a first edge device of said plurality of edge devices, and wherein the input data further comprises data received from a second edge device of the plurality of edge devices.

10. The network system of any of the above claims, wherein the at least one configuration parameter comprises one or more of the following: an operating parameter for the sensor, such as a sampling rate, a frame rate, an exposure time, an aperture angle, a frequency, a power, an orientation angle; an operational status such as an on-state, an off-state, a sleep mode; a sensing range, such as a temperature range, a frequency bandwidth, a distance range; a sensing option, such as internal sensing, external sensing, a sensing protocol, a calibration parameter; an encryption key.

11. The network system of any of the above claims, wherein the at least one model is based on a neural network comprising a plurality of layers, each layer comprising a plurality of neurons and each neuron being associated with a bias, an activation function and at least one weight associated with at least one neuron of a lower layer;
wherein the network system is configured to update the model by modifying at least one of the number of layers, the number of neurons, a weight, a bias and an activation function, wherein preferably the network system is configured to update the model by retraining the last layer, preferably by at least increasing the number of neurons of the last layer, wherein more preferably the central control system is configured to update the model by retraining the last two layers.

12. The network system of any one of the above claims, wherein the at least one model is based on a decision tree comprising a plurality of branches, each branch comprising a threshold, wherein the network system is configured to update the model by modifying at least one of the number of branches and a threshold.

13. The network system of any one of the above claims, wherein the event comprises one of an event related to an object in the one or more edge devices or in the vicinity of the one or more edge devices, an event related to a state of an object in the one or more edge devices or in the vicinity of the one or more edge devices, an event related to the area in the vicinity of the one or more edge devices, an event related to a state of a component of the edge device, and/or wherein the sensor is selected from: an optical sensor such as a photodetector or an image sensor, a sound sensor, a radar such as a Doppler effect radar, a LIDAR, a humidity sensor, an air quality sensor, a temperature sensor, a motion sensor, an antenna, an RF sensor, a metering device, a vibration sensor, a malfunctioning sensor, a measurement device for measuring a maintenance related parameter of a component of the edge device, an alarm device, and/or wherein the plurality of edge devices comprises an edge device with multiple sensors, such as an optical sensor, a sound sensor, and a radar such as a Doppler effect radar, wherein the processing means is configured to process input data in accordance with the model to derive at least one configuration parameter of each sensor of the multiple sensors, and/or wherein the plurality of edge devices comprises any one or more of the following: a luminaire, a bin, a sensor device, a street furniture, a charging station, a payment terminal, a parking terminal, a street sign, a traffic light, a telecommunication cabinet, a traffic surveillance terminal, a safety surveillance terminal, a water management terminal, a weather station, an energy metering terminal, an access lid in a pavement.

14. The network system of any one of the above claims, wherein the plurality of edge devices comprises an edge device with at least two sensors configured for obtaining at least two sets of environmental data related to an event in the vicinity of the edge device and a classification module configured to determine classification data of the event based on the at least two sets of environmental data, wherein preferably the at least one remote device is configured to determine the updated model using the classification data, preferably as a portion of the input data.

15. The network system of any one of the above claims, wherein the network is configured to determine the updated model based on one or more of the following: environmental data measured by the sensor, edge processed data based on the environmental data, central control system processed data, fog processed data, data from external data sources.

## Patentansprüche

1. Netzwerksystem, umfassend:
- eine Vielzahl von Edge-Vorrichtungen (10), z. B. umfassend Leuchten, wobei die Vielzahl von Edge-Vorrichtungen an einer Vielzahl von Standorten eingerichtet ist, die Vielzahl von Edge-Vorrichtungen umfassend
- mindestens einen Sensor (11), wobei der Sensor zum Erhalten von Umgebungsdaten konfiguriert ist, die sich auf ein Ereignis in der Nähe einer Edge-Vorrichtung der Vielzahl von Edge-Vorrichtungen beziehen, wobei der Sensor gemäß mindestens einem Konfigurationsparameter eingestellt ist,
**dadurch gekennzeichnet, dass** die Vielzahl von Edge-Vorrichtungen ferner umfasst
- ein Verarbeitungsmittel (50), das konfiguriert ist, um Eingabedaten gemäß einem Modell zu verarbeiten, um den mindestens einen Konfigurationsparameter des Sensors herzuleiten;
- wobei das Netzwerksystem konfiguriert ist, um im Laufe der Zeit ein aktualisiertes Modell zu bestimmen und das Verarbeitungsmittel neu einzustellen, um Eingabedaten gemäß dem aktualisierten Modell zu verarbeiten.

2. Netzwerksystem nach Anspruch 1, wobei das Netzwerksystem konfiguriert ist, um Selbstlernfähigkeiten aufzuweisen, um im Laufe der Zeit ein aktualisiertes Modell herzuleiten.

3. Netzwerksystem nach einem der vorstehenden Ansprüche, wobei das Netzwerk konfiguriert ist, um das aktualisierte Modell basierend auf einem oder mehreren der Folgenden zu bestimmen: einem Qualitätskriterium, einem Zuverlässigkeitsindex eines Sensors.

4. Netzwerksystem des vorstehenden Anspruchs, wobei das Netzwerk konfiguriert ist, um das aktualisierte Modell durch Ändern eines Parameters des mindestens einen Sensors der Vielzahl von Edge-Vorrichtungen, der den niedrigsten Zuverlässigkeitsindex aufweist, zu bestimmen.

5. Netzwerksystem nach einem der vorstehenden Ansprüche, ferner umfassend mindestens eine entfernte Vorrichtung (20, 30), die konfiguriert ist, um das aktualisierte Modell zu bestimmen, ferner bevorzugt umfassend ein zentrales Steuersystem (30) in Kommunikation mit der Vielzahl von Edge-Vorrichtungen, wobei die mindestens eine entfernte Vorrichtung das zentrale Steuersystem umfasst.

6. Netzwerksystem nach dem vorstehenden Anspruch, ferner umfassend eine Fog-Vorrichtung (20), die einem Teilsatz der Vielzahl von Edge-Vorrichtungen zugeordnet ist, wobei die mindestens eine entfernte Vorrichtung die Fog-Vorrichtung umfasst.

7. Netzwerksystem nach dem vorstehenden Anspruch, wobei die Fog-Vorrichtung (20) konfiguriert ist, um Umgebungsdaten von dem Teilsatz zu empfangen, um von dem Teilsatz empfangene Daten zu verarbeiten und das Modell basierend auf den verarbeiteten Daten zu aktualisieren.

8. Netzwerksystem nach einem der vorstehenden Ansprüche, wobei die Eingabedaten ein beliebiges oder mehrere der Folgenden umfasst: durch den Sensor gemessene Umgebungsdaten (S1), auf den Umgebungsdaten basierende Edge-verarbeitete Daten (D1), von dem zentralen Steuersystem verarbeitete Daten (D1"), Fog-verarbeitete Daten (D1'), Daten aus externen Datenquellen.

9. Netzwerksystem nach einem der vorstehenden Ansprüche, wobei das Verarbeitungsmittel und der Sensor in einer ersten Edge-Vorrichtung der Vielzahl von Edge-Vorrichtungen eingeschlossen sind und wobei die Eingabedaten ferner Daten umfassen, die von einer zweiten Edge-Vorrichtung der Vielzahl von Edge-Vorrichtungen empfangen werden.

10. Netzwerksystem nach einem der vorstehenden Ansprüche, wobei der mindestens eine Konfigurationsparameter eines oder mehrere der Folgenden umfasst: einen Betriebsparameter für den Sensor, wie eine Abtastrate, eine Bildrate, eine Belichtungszeit, einen Öffnungswinkel, eine Frequenz, eine Leistung, einen Orientierungswinkel; einen Betriebsstatus, wie einen Ein-Zustand, einen Aus-Zustand, einen Schlafmodus; einen Erfassungsbereich, wie einen Temperaturbereich, eine Frequenzbandbreite, einen Abstandsbereich; eine Erfassungsoption, wie interne Erfassung, externe Erfassung, ein Erfassungsprotokoll, einen Kalibrierungsparameter; einen Verschlüsselungsschlüssel.

11. Netzwerksystem nach einem der vorstehenden Ansprüche, wobei das mindestens eine Modell auf einem neuronalen Netzwerk basiert, umfassend eine Vielzahl von Schichten, jede Schicht umfassend eine Vielzahl von Neuronen und wobei jedes Neuron einem Bias, einer Aktivierungsfunktion und mindestens einer Gewichtung zugeordnet ist, die mindestens einem Neuron einer unteren Schicht zugeordnet ist;
wobei das Netzwerksystem konfiguriert ist, um das Modell durch Modifizieren von mindestens einem der Anzahl von Schichten, der Anzahl von Neuronen, einer Gewichtung, einem Bias und einer Aktivierungsfunktion zu aktualisieren, wobei vorzugsweise das Netzwerksystem konfiguriert ist, um das Modell durch erneutes Trainieren der letzten Schicht zu aktualisieren, vorzugsweise mindestens durch Erhöhen der Anzahl von Neuronen der letzten Schicht, wobei mehr bevorzugt das zentrale Steuersystem konfiguriert ist, um das Modell durch erneutes Trainieren der letzten zwei Schichten zu aktualisieren.

12. Netzwerksystem nach einem der vorstehenden Ansprüche, wobei das mindestens eine Modell auf einem Entscheidungsbaum basiert, umfassend eine Vielzahl von Zweigen, jeder Zweig umfassend einen Schwellenwert, wobei das Netzwerksystem konfiguriert ist, um das Modell durch Modifizieren von mindestens einem von der Anzahl der Zweige und einem Schwellenwert zu aktualisieren.

13. Netzwerksystem nach einem der vorstehenden Ansprüche, wobei das Ereignis eines von einem Ereignis, das sich auf ein Objekt in der einen oder den mehreren Edge-Vorrichtungen oder in der Nähe der einen oder der mehreren Edge-Vorrichtungen bezieht, einem Ereignis, das sich auf einen Zustand eines Objekts in der einen oder den mehreren Edge-Vorrichtungen oder in der Nähe der einen oder der mehreren Edge-Vorrichtungen bezieht, einem Ereignis, das sich auf das Gebiet in der Nähe der einen oder der mehreren Edge-Vorrichtungen bezieht, einem Ereignis, das sich auf einen Zustand einer Komponente der Edge-Vorrichtung bezieht, umfasst, und/oder wobei der Sensor ausgewählt ist aus: einem optischen Sensor, wie einem Fotodetektor oder einem Bildsensor, einem Schallsensor, einem Radar, wie einem Dopplereffektradar, einem LIDAR, einem Feuchtigkeitssensor, einem Luftqualitätssensor, einem Temperatursensor, einem Bewegungssensor, einer Antenne, einem HF-Sensor, einer Zählervorrichtung, einem Vibrationssensor, einem Störungssensor, einer Messvorrichtung zum Messen eines wartungsbezogenen Parameters einer Komponente der Edge-Vorrichtung, einer Alarmvorrichtung, und/oder wobei die Vielzahl von Edge-Vorrichtungen eine Edge-Vorrichtung mit mehreren Sensoren, wie einem optischen Sensor, einem Schallsensor und einem Radar, wie einem Dopplereffektradar, umfasst, wobei das Verarbeitungsmittel konfiguriert ist, um Eingabedaten gemäß dem Modell zu verarbeiten, um mindestens einen Konfigurationsparameter jedes Sensors der mehreren Sensoren herzuleiten, und/oder wobei die Vielzahl von Edge-Vorrichtungen ein beliebiges oder mehrere der Folgenden umfasst: eine Leuchte, einen Abfalleimer, eine Sensorvorrichtung, eine Straßenausstattung, eine Ladestation, ein Zahlungsterminal, ein Parkterminal, ein Straßenschild, eine Verkehrsampel, einen Telekommunikationsschrank, ein Verkehrsüberwachungsterminal, ein Sicherheitsüberwachungsterminal, ein Wasserverwaltungsterminal, eine Wetterstation, ein Energiezählerterminal, einen Zugangsdeckel in einem Straßenpflaster.

14. Netzwerksystem nach einem der vorstehenden Ansprüche, wobei die Vielzahl von Edge-Vorrichtungen eine Edge-Vorrichtung mit mindestens zwei Sensoren, die zum Erhalten von mindestens zwei Sätzen von Umgebungsdaten konfiguriert sind, die sich auf ein Ereignis in der Nähe der Edge-Vorrichtung beziehen, und ein Klassifizierungsmodul umfasst, das konfiguriert ist, um Klassifizierungsdaten des Ereignisses basierend auf den mindestens zwei Sätzen von Umgebungsdaten zu bestimmen, wobei vorzugsweise die mindestens eine entfernte Vorrichtung konfiguriert ist, um das aktualisierte Modell unter Verwendung der Klassifizierungsdaten, vorzugsweise als ein Bestandteil der Eingabedaten, zu bestimmen.

15. Netzwerksystem nach einem der vorstehenden Ansprüche, wobei das Netzwerk konfiguriert ist, um das aktualisierte Modell basierend auf einem oder mehreren der Folgenden zu bestimmen: durch den Sensor gemessene Umgebungsdaten, Edge-verarbeitete Daten basierend auf den Umgebungsdaten, von einem zentralen Steuersystem verarbeitete Daten, Fog-verarbeitete Daten, Daten aus externen Datenquellen.

## Revendications

1. Système de réseau comprenant :
- une pluralité de dispositifs de bord (10), par exemple comprenant des luminaires, ladite pluralité de dispositifs de bord étant agencés au niveau d'une pluralité d'emplacements, la pluralité de dispositifs de bord comprenant
- au moins un capteur (11), ledit capteur étant configuré pour obtenir des données environnementales relatives à un événement à proximité d'un dispositif de bord de la pluralité de dispositifs de bord, ledit capteur étant réglé selon au moins un paramètre de configuration, **caractérisé en ce que** la pluralité de dispositifs de bord comprend en outre
- un moyen de traitement (50) configuré pour traiter des données d'entrée conformément à un modèle pour déduire l'au moins un paramètre de configuration du capteur ;
- dans lequel le système de réseau est configuré pour déterminer un modèle mis à jour au fil du temps et pour réinitialiser les moyens de traitement de manière à traiter des données d'entrée conformément au modèle mis à jour.

2. Système de réseau selon la revendication 1, dans lequel le système de réseau est configuré pour présenter des capacités d'auto-apprentissage afin de déduire un modèle mis à jour au fil du temps.

3. Système de réseau selon l'une quelconque des revendications précédentes, dans lequel le réseau est configuré pour déterminer le modèle mis à jour sur la base d'un ou de plusieurs parmi ce qui suit : un critère de qualité, un indice de fiabilité d'un capteur.

4. Système de réseau de la revendication précédente, dans lequel le réseau est configuré pour déterminer le modèle mis à jour en modifiant un paramètre de l'au moins un capteur de la pluralité de dispositifs de bord présentant l'indice de fiabilité le plus bas.

5. Système de réseau selon l'une quelconque des revendications précédentes, comprenant en outre au moins un dispositif distant (20, 30) configuré pour déterminer le modèle mis à jour, comprenant en outre de préférence un système de commande central (30) en communication avec ladite pluralité de dispositifs de bord, dans lequel l'au moins un dispositif distant comprend le système de commande central.

6. Système de réseau selon la revendication précédente, comprenant en outre un dispositif de brouillard (20) associé à un sous-ensemble de ladite pluralité de dispositifs de bord, dans lequel l'au moins un dispositif distant comprend le dispositif de brouillard.

7. Système de réseau selon la revendication précédente, dans lequel le dispositif de brouillard (20) est configuré pour recevoir des données environnementales dudit sous-ensemble, pour traiter les données reçues dudit sous-ensemble et mettre à jour le modèle sur la base des données traitées.

8. Système de réseau selon l'une quelconque des revendications précédentes, dans lequel les données d'entrée comprennent un ou plusieurs parmi ce qui suit : des données environnementales (S1) mesurées par le capteur, des données traitées de bord (D1) basées sur les données environnementales, des données traitées par le système de commande central (D1"), des données traitées en brouillard (D1'), des données provenant de sources de données externes.

9. Système de réseau selon l'une quelconque des revendications précédentes, dans lequel le moyen de traitement et le capteur sont inclus dans un premier dispositif de bord de ladite pluralité de dispositifs de bord, et dans lequel les données d'entrée comprennent en outre des données reçues d'un second dispositif de bord de la pluralité de dispositifs de bord.

10. Système de réseau selon l'une quelconque des revendications précédentes, dans lequel l'au moins un paramètre de configuration comprend un ou plusieurs parmi ce qui suit : un paramètre de fonctionnement pour le capteur, tel qu'un taux d'échantillonnage, un taux de trame, un temps d'exposition, un angle d'ouverture, une fréquence, une puissance, un angle d'orientation ; un état de fonctionnement tel qu'un état de marche, un état d'arrêt, un mode de veille ; une plage de détection, telle qu'une plage de température, une bande passante de fréquence, une plage de distance ; une option de détection, telle qu'une détection interne, une détection externe, un protocole de détection, un paramètre d'étalonnage ; une clé de chiffrement.

11. Système de réseau selon l'une quelconque des revendications précédentes, dans lequel l'au moins un modèle est basé sur un réseau neuronal comprenant une pluralité de couches, chaque couche comprenant une pluralité de neurones et chaque neurone étant associé à un biais, une fonction d'activation et au moins un poids associé à au moins un neurone d'une couche inférieure ;
dans lequel le système de réseau est configuré pour mettre à jour le modèle en modifiant au moins l'un parmi le nombre de couches, le nombre de neurones, un poids, un biais et une fonction d'activation, dans lequel de préférence le système de réseau est configuré pour mettre à jour le modèle en entraînant de nouveau la dernière couche, de préférence en augmentant au moins le nombre de neurones de la dernière couche, dans lequel plus préférablement le système de commande central est configuré pour mettre à jour le modèle en entraînant de nouveau les deux dernières couches.

12. Système de réseau selon l'une quelconque des revendications précédentes, dans lequel l'au moins un modèle est basé sur un arbre de décision comprenant une pluralité de branches, chaque branche comprenant un seuil, dans lequel le système de réseau est configuré pour mettre à jour le modèle en modifiant au moins l'un parmi le nombre de branches et un seuil.

13. Système de réseau selon l'une quelconque des revendications précédentes, dans lequel l'événement comprend l'un parmi un événement lié à un objet dans le un ou les dispositifs de bord ou à proximité des un ou plusieurs dispositifs de bord, un événement relatif à un état d'un objet dans le ou les dispositifs de bord ou à proximité du ou des dispositifs de bord, un événement relatif à la zone à proximité du ou des dispositifs de bord, un événement relatif à un état d'un composant du dispositif de bord, et/ou dans lequel le capteur est sélectionné parmi : un capteur optique tel qu'un photodétecteur ou un capteur d'image, un capteur de son, un radar tel qu'un radar à effet Doppler, un LIDAR, un capteur d'humidité, un capteur de qualité de l'air, un capteur de température, un capteur de mouvement, une antenne, un capteur RF, un dispositif de comptage, un capteur de vibration, un capteur de dysfonctionnement, un dispositif de mesure pour mesurer un paramètre relatif à la maintenance d'un composant du dispositif de bord, un dispositif d'alarme, et/ou dans lequel la pluralité de dispositifs de bord comprend un dispositif de bord avec de multiples capteurs, tels qu'un capteur optique, un capteur sonore et un radar tel qu'un radar à effet Doppler, dans lequel les moyens de traitement sont configurés pour traiter des données d'entrée conformément au modèle pour déduire au moins un paramètre de configuration de chaque capteur des multiples capteurs, et/ou dans lequel la pluralité de dispositifs de bord comprend l'un quelconque ou plusieurs parmi ce qui suit : un luminaire, une poubelle, un dispositif capteur, un mobilier urbain, une borne de recharge, un terminal de paiement, un terminal de stationnement, un panneau de signalisation, un feu de circulation, une armoire de télécommunication, un terminal de surveillance de la circulation, un terminal de surveillance de la sécurité, un terminal de gestion de l'eau, une station météorologique, un comptage d'énergie terminal, un couvercle d'accès dans une chaussée.

14. Système de réseau selon l'une quelconque des revendications précédentes, dans lequel la pluralité de dispositifs de bord comprend un dispositif de bord avec au moins deux capteurs configurés pour obtenir au moins deux ensembles de données environnementales relatives à un événement à proximité du dispositif de bord et un module de classification configuré pour déterminer des données de classification de l'événement sur la base des au moins deux ensembles de données environnementales, dans lequel de préférence l'au moins un dispositif distant est configuré pour déterminer le modèle mis à jour à l'aide des données de classification, de préférence comme partie des données d'entrée.

15. Système de réseau selon l'une quelconque des revendications précédentes, dans lequel le réseau est configuré pour déterminer le modèle mis à jour sur la base d'un ou de plusieurs parmi ce qui suit : des données environnementales mesurées par le capteur, des données traitées de bord sur la base des données environnementales, des données traitées par le système de commande central, des données traitées de brouillard, des données provenant de sources de données externes.
